# EUROPÄISCHE PATENTSCHRIFT

(11) **EP 1 650 091 B1**
(45) Veröffentlichungstag und Bekanntmachung des Hinweises auf die Patenterteilung: **24.09.2008**
(21) Anmeldenummer: 04024915.3
(22) Anmeldetag: 20.10.2004
(51) Int. Cl.: B60S 3/00, B60S 3/04

(54) **Handgerät zur Trocknung gewaschener Fahrzeuge**
Hand-held drying apparatus for washed vehicles
Appareil de séchage à main pour véhicules automobiles nettoyés

(43) Veröffentlichungstag der Anmeldung: 26.04.2006
(73) Patentinhaber: Posth, Tassilo, 66117 Saarbrücken (DE)
(72) Erfinder: Posth, Tassilo, 66119 Saarbrücken (DE); Posth, Jens Dominic, 66119 Saarbrücken (DE)

(56) Entgegenhaltungen:
- EP-A- 0 568 179
- CA-A1- 2 342 255
- DE-A1- 10 333 976
- US-A- 5 950 331
- US-A- 6 021 584

## Beschreibung

Die Erfindung betrifft ein Handgerät zur Trocknung gewaschener Fahrzeuge, das länglich ausgebildet, über eine flexible Leitung an eine Druckluftquelle anschließbar ist und wenigstens eine Austrittsöffnung für Druckluft aufweist, wobei die Austrittsöffnung am Gerät längsseitig angeordnet ist.

### Stand der Technik

Ein solches Handgerät zur Trocknung gewaschener Fahrzeuge, geht aus der US-A-6 021 584 hervor. Das länglich ausgebildete Handgerät, das über eine flexible Leitung an eine Druckluftquelle anschließbar ist und wenigstens eine Austrittsöffnung für Druckluft aufweist, wobei die Austrittsöffnung am Gerät längsseitig angeordnet ist, und wobei das Handgerät mit einer schlitzförmigen Austrittsöffnung oder/und einer Reihenanordnung von Austrittsöffnungen für die Erzeugung einer vorhangartigen Trocknungsströmung versehen wird.

### Aufgabenstellung

Der vorliegenden Erfindung liegt die Aufgabe zu Grunde, ein neues Handgerät der eingangs erwähnten Art zu schaffen, das eine effektivere Trocknung gewaschener Fahrzeuge als bekannte solche Vorrichtungen ermöglicht und sich insbesondere zur Verwendung in Handwäsche-Waschanlagen eignet.

### Beschreibung der eigenen Erfindung

Das diese Aufgabe lösende Handgerät zur Trocknung gewaschener Fahrzeuge ist dadurch gekennzeichnet, dass die Länge der schlitzförmigen Austrittsöffnung bzw. der Reihenanordnung von Austrittsöffnungen verstellbar ist, und dass ein Ventil zur Unterbrechung oder/und Steuerung des Luftstroms vorgesehen ist.

Im Unterschied zu dem Handgerät nach Stand der Technik ist die Länge der schlitzförmigen Austrittsöffnung bzw. der Reihenanordnung von Austrittsöffnungen verstellbar, so dass das Gerät in seiner Länge an unterschiedliche Fahrzeugbreiten angepasst werden kann, durch ein Ventil am Handgerät kann die vorhangartige Trocknungsströmung unterbrochen und/oder gesteuert werden.

In einer bevorzugten Ausführungsform der Erfindung ist ein länglicher Hohlkörper vorgesehen, mit dessen Innenraum die schlitzförmige Austrittsöffnung bzw. die Reihenanordnung von Austrittsöffnungen in Verbindung steht.

Alternativ kann für jede Austrittsöffnung der Reihenanordnung eine gesonderte, an einem Ende offene Leitungen zur Druckluftzuführung und ein gemeinsamer länglicher Träger für die Leitung gebildet sein.

Zum Beispiel kann der längliche Hohlkörper zur Längenverstellung gegeneinander teleskopartig, verschiebbare Teile aufweisen. Auch der genannte, die einzelnen Leitungen haltende Träger kann in solcher Weise verstellbar sein. Alternativ könnte es sich bei dem Träger um ein Scherengitter handeln.

In einer Ausführungsform ist der ist der längliche Hohlkörper bügelartig geformt, und weist an beiden Enden einen Handgriff auf, so dass das Handgerät durch zwei Personen von gegenüberliegenden Seiten eines Fahrzeugs aus gehalten und in Längsrichtung über das Fahrzeug geführt werden kann. Vorzugsweise besteht eine Arretierungsmöglichkeit, so dass sich eine eingestellte Länge nicht verändert.

### Ausführungsbeispiele

Die Erfindung soll nun anhand von Ausführungsbeispielen und der beiliegenden, sich auf diese Ausführungsbeispiele beziehenden Zeichnungen näher erläutert werden. Es zeigen:
**Fig. 1** ein Ausführungsbeispiel für ein Handgerät zur Trocknung gewaschener Fahrzeuge nach Stand der Technik in einer Seitenansicht und einer Ansicht von unten,
**Fig. 2** eine alternative Ausführungsform zu dem Ausführungsbeispiel von **Fig. 1** mit einer schlitzförmigen Austrittsöffnung für Druckluft,
**Fig. 3** ein Ausführungsbeispiel für ein Handgerät nach der Erfindung in unterschiedlich eingestellten Längen, und
**Fig. 4** ein Ausführungsbeispiel für ein Handgerät zur Trocknung gewaschener Fahrzeuge nach der Erfindung.

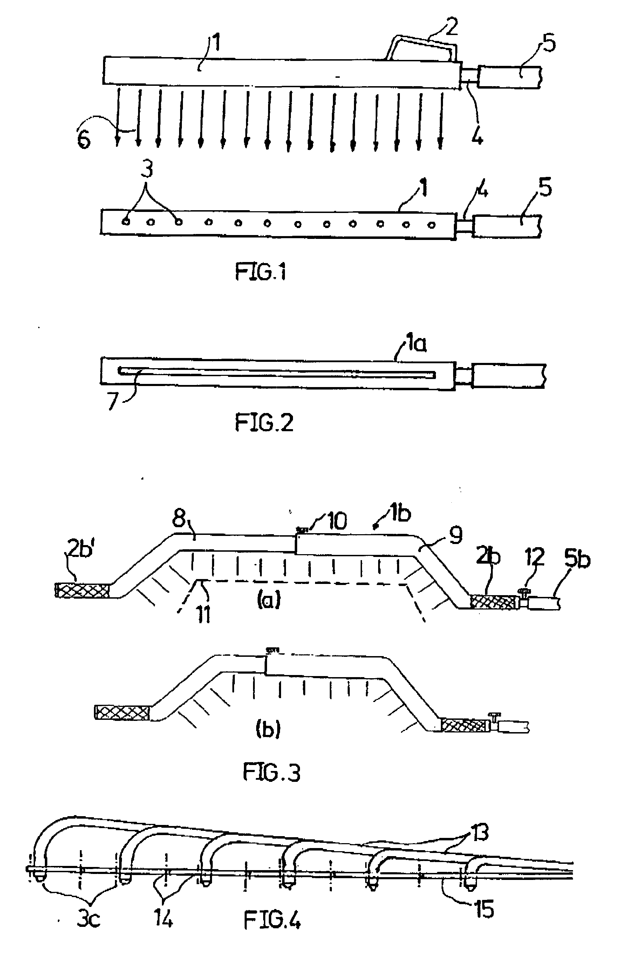

Gemäß Fig. 1 ist ein länglicher Hohlkörper 1 mit einem Handgriff 2 versehen und weist an seiner Unterseite in linearer Reihe angeordnete Öffnungen 3 für den Austritt von Druckluft auf. An seinem mit Handgriff 2 versehenen Ende ist am Hohlkörper 1 ein Anschlussstück 4 angebracht, das der Verbindung mit einem Druckschlauch 5 dient, welcher an eine Druckluftquelle (nicht gezeigt) anschließbar ist.

In dem gezeigten Ausführungsbeispiel beträgt die Länge des Hohlkörpers etwa 60 cm. Durch die Reihenanordnung von Austrittsöffnungen 3 lässt sich eine vorhangartige Trocknungsströmung 6 erzeugen, welche weite Oberflächenbereiche einer zu trocknenden Fahrzeugkarosserie erfasst.

Bei dem Ausführungsbeispiel von **Fig. 2** ist anstelle einer Reihenanordnung von Austrittsöffnungen an einem Hohlkörper 1a eine schlitzförmige Austrittsöffnung 7 gebildet.

Ein in **Fig. 3** gezeigter länglicher Hohlkörper **1b** mit einer nicht sichtbaren Schlitzöffnung oder Reihenanordnung mehrerer Öffnungen ist bügelartig ausgebildet und weist zwei Teile **8** und **9** auf, die gegeneinander teleskopartig unter Veränderung der Bügellänge verschiebbar sind. Mit Hilfe einer Schraube **10** lassen sich die Teile **8** und **9** in einer gewünschten Einstellposition arretieren. Die eingestellte Bügellänge kann an die Breite einer Fahrzeugkarosserie angepasst sein, welche in **Fig. 3a** durch eine Strichlinie **11** angedeutet ist. An den Knickstellen des Hohlkörpers könnten durch flexibles Material Gelenke gebildet sein, so dass sich die Enden verschwenken lassen.

Ein Ventil **12** erlaubt die Unterbrechung der Trocknungsströmung.

An den freien Enden der Teile **8** und **9** ist jeweils ein Handgriff **2b** bzw. **2b'** gebildet. So lässt sich das Handgerät durch zwei Personen von den gegenüberliegenden Seiten eines Fahrzeugs aus halten. Der Handgriff könnte auch als T-Stück oder bügelartig zum Ergreifen mit zwei Händen ausgebildet sein.

Bei dem in **Fig. 4** gezeigten Handgerät ist eine Reihenanordnung von Austrittsöffnungen **3c** vorgesehen, welche in Verbindung mit Leitung **13** stehen, die in ein gemeinsames Anschlussstück (nicht gezeigt) münden. Die in Form flexibler Schläuche ausgebildeten Leitungen **13** sind nahe den Austrittsöffnungen **3c** mit einem in seiner Länge verstellbaren, Gelenke **14** aufweisenden Scherengitterträger **15** verbunden.

## Patentansprüche

1. Handgerät zur Trocknung gewaschener Fahrzeuge (11), das länglich ausgebildet, über eine flexible Leitung (7) an eine Druckluftquelle anschließbar ist und wenigstens eine Austrittsöffnung (3, 7) für Druckluft aufweist, wobei die Austrittsöffnung am Gerät längsseitig angeordnet ist, und wobei das Handgerät mit einer schlitzförmigen Austrittsöffnung (7) und /oder einer Reihenanordnung von Austrittsöffnungen (3) für die Erzeugung einer vorhangartigen Trocknungsströmung (6) versehen wird, **dadurch gekenntzeichnet,** dass die Länge der schlitzförmigen Austrittsöffnung (7) bzw. der Reihenanordnung von Austrittsöffnungen (3) verstellbar ist, und dass ein Ventil (12) zur Unterbrechung oder/und Steuerung des Druckluftstroms vorgesehen ist.

2. Handgerät nach Anspruch 1 **dadurch gekennzeichnet, dass** ein länglicher, die schlitzförmige Austrittsöffnung (7) bzw. die Reihenanordnung von Austrittsöffnungen (3) aufweisender Hohlkörper (1, 1a, 1b) gebildet oder/und dass für die Austrittsöffnungen (3c) der Reihenanordnung von Austrittsöffnungen gesonderte, durch einen länglichen Träger (15) gehaltene Leitung (13) zur Druckluftzuführung vorgesehen ist.

3. Handgerät nach Anspruch 1 oder 2 **dadurch gekennzeichnet, dass** der längliche Hohlkörpers oder Träger (1, 1a, 1b) gegeneinander teleskopartig verschiebbare Teile (8, 9) aufweist.

4. Handgerät nach Anspruch 1 oder 2, **dadurch gekennzeichnet, dass** der längliche Träger ein Scherengitterträger (15) ist.

5. Handgerät nach einem der Ansprüche 1 bis 4, **dadurch gekennzeichnet, dass** der längliche Hohlkörper (1b) oder Träger bügelartig geformt ist.

6. Handgerät nach einem der Ansprüche 1 bis 5, **dadurch gekennzeichnet, dass** an beiden Enden des länglichen Hohlkörper (1b) oder Trägers ein Handgriff (2b, 2b') gebildet ist.

7. Handgerät nach einem der Ansprüche 1 bis 6, **dadurch gekennzeichnet, dass** eine Arretiereinrichtung (10) zum Fixieren einer eingestellten Länge vorgesehen ist.

## Claims

1. A handheld device for the purpose of drying washed cars (11) being of longish form, connectable to a compressed-air source via a flexible conduit (7) and comprising at least one outlet (3, 7) for compressed-air whereas the outlet shall be placed alongside the device and whereas the handheld device shall be provided with a slot-shaped outlet (7) and/or an in-line configuration of outlets (3) for generating a curtain-like drying flow (6),
**characterised by that** the length of the slot-shaped outlet (7) and, as the case may be, of the in-line configuration of outlets (3) shall be adjustable and that a valve (12) shall be provided for interrupting and/or controlling the compressed-air flow.

2. A handheld device according to claim 1 **characterised by that** an oblong hollow body (1, 1 a, 1 b) shall be formed comprising the slot-shaped outlet (7) or, as the case may be, the in-line configuration of outlets (3) and/or that a separate conduit (13) held by an oblong support (15) leading to the compressed-air intake shall be provided for the outlets (3c) of the in-line configuration of outlets.

3. A handheld device according to claim 1 or 2 **characterised by that** the oblong hollow body or support (1, 1 a, 1b) shall comprise parts (8, 9) being telescopically movable against each other.

4. A handheld device according to claim 1 or 2 **characterised by that** the oblong support shall be a worm fence support (15).

5. A handheld device according to the claims 1 to 4 **characterised by that** the oblong hollow body (1 b) or support shall be bow-shaped.

6. A handheld device according to one of the claims 1 to 5 **characterised by that** a handle (2b, 2b*) shall be formed at both ends of the oblong hollow body (1 b) or of the support.

7. A handheld device according to one of the claims 1 to 6 **characterised by that** a fixing device (10) shall be provided for fixing an adjusted length.

## Revendications

1. Appareil manuel pour le séchage de véhicules lavés (11), de forme longitudinale, qui peut être raccordé par une conduite flexible (7) à une source d'air comprimé et qui est pourvu d'au moins une ouverture d'évacuation (3, 7) de l'air comprimé, en sachant que l'ouverture d'évacuation sur l'appareil est disposée longitudinalement en ce faisant que l'appareil manuel est pourvu d'une ouverture d'évacuation ayant la forme d'une fente (7) et / ou d'une rangée d'ouvertures d'évacuation (3) pour la création d'un flux de séchage formant un rideau (6),
**caractérisé en ce que** l'ouverture d'évacuation ayant la forme d'une fente (7) respectivement la rangée d'ouvertures d'évacuation (3) est réglable et qu'une valve (12) est prévue pour l'interruption et / ou la régulation du flux d'air comprimé.

2. Appareil manuel selon revendication 1 **caractérisé en ce qu'**un corps creux (1, 1 a, 1 b) présentant une ouverture d'évacuation longitudinale ayant la forme d'une fente (7) respectivement une rangée d'ouvertures d'évacuation (3) est formé et / ou qu'une conduite (13) d'alimentation en air comprimé maintenue par un support longitudinal (15) est prévue pour les ouvertures d'évacuation (3c) de la rangée d'ouvertures d'évacuation.

3. Appareil manuel selon revendications 1 ou 2 **caractérisé en ce que** le corps creux longitudinal ou le support (1, 1 a, 1 b) est composé de pièces coulissantes de manière télescopique les unes par rapport aux autres (8, 9).

4. Appareil manuel selon revendications 1 ou 2 **caractérisé en ce que** le support longitudinal est un support de grillage à ciseaux (15).

5. Appareil manuel selon revendications de 1 à 4 **caractérisé en ce que** le corps creux longitudinal (1 b) ou le support adopte la forme d'un étrier ou d'un arceau.

6. Appareil manuel selon revendications de 1 à 5 **caractérisé en ce que** les deux extrémités du corps creux longitudinal (1 b) ou du support forment une poignée (2b, 2b').

7. Appareil manuel selon revendications de 1 à 6 **caractérisé en ce qu'**un dispositif d'arrêt (10) est prévu pour la fixation d'une longueur réglée.
